# EUROPÄISCHE PATENTANMELDUNG

(11) **EP 0 843 103 A2**
(43) Veröffentlichungstag der Anmeldung: **20.05.1998**
(21) Anmeldenummer: 97114134.6
(22) Anmeldetag: 16.08.1997
(51) Int. Cl.: F16B 7/04

(54) **Profilverbindung**

(30) Priorität: 19.11.1996 DE 19647758
(71) Anmelder: ROBERT BOSCH GMBH, 70442 Stuttgart (DE)
(72) Erfinder: Wiesenfeldt, Albrecht, 71336 Waiblingen (DE); Berger, Johannes, 71364 Winnenden (DE)

(57) **Zusammenfassung**

Die Erfindung betrifft eine Profilverbindung (11), insbesondere für Schutz- und Trenneinrichtungen, Gestelle und Regale, mit Profilschienen (12), die eine sich in Längsrichtung erstreckende Durchgangsbohrung (14) und an dessen Außenumfang angeordneten Nuten (16) aufweisen und mit Verbindungselementen (13, 31), deren Außenfläche (19) zur Stirnseite (27) der Profilschiene (12) anordenbar ist, wobei die Profilschiene (12) eine in etwa quadratisch ausgebildete Durchgangsbohrung (14) aufweist, in die ein an der Außenfläche (19) des Verbindungselmentes (13, 31) angeordneter Zapfen (22) unter Pressung einsetzbar ist.

## Beschreibung

### Stand der Technik

Die Erfindung geht aus von einer Profilverbindung nach der Gattung des Patentanspruchs 1.

Eine derartige Profilverbindung ist aus der DE-U 86 22 739.4 bekannt, bei der Profilschienen über Verbindungselemente, auch Eckverbinder genannt, für Gestelle oder dergleichen verwendet werden. Die Profilschiene weist eine sich in Längsrichtung der Profilschiene erstreckende Durchgangsbohrung auf, an dessen Außenumfang sich ebenfalls in Längsrichtung erstreckende T-förmige Nuten vorgesehen sind. Die Verbindungselemente weisen einen quaderförmigen Körper auf, dessen Außenflächen zur Stirnseite der Profilschiene anordenbar sind. Dafür sind in dem Körper des Verbindungselementes Durchbrüche zur Aufnahme von Schrauben vorgesehen, die darin einsetzbar sind und in die Durchgangsbohrung der Profilschiene zur Befestigung des Verbindungselementes in eine Stirnseite der Profilschiene eingreifen.

Bei der Montage einer solchen Anordnung muß darauf geachtet werden, daß die miteinander zu verbindenden Teile vor dem Festziehen der Schraube zueinander ausgerichtet werden. Desweiteren weist eine derartige Profilverbindung den Nachteil auf, daß eine aufwendige Bearbeitung des Verbindungselementes erforderlich ist, um die Befestigungsschrauben darin anzuordnen und die Profilschienen zueinander festzulegen. Darüber hinaus ist der Zusammenbau durch die hohe Anzahl an Bauteilen montageintensiv. Desweiteren kann mit einer derartigen geschraubten Verbindung zwischen dem Verbindungselement und der Profilschiene eine Aufnahme von maximal drei an dem Verbindungselement um 900 zueinander versetzt angeordnete Profilschienen ermöglicht sein.

Desweiteren sind Profilverbindungssysteme bekannt, bei welchen Rohre über sogenannte Einschlagverbinder miteinander verbindbar sind. Diese Einschlagverbinder weisen einstückig angeformte Zapfen auf, die in die Durchgangsbohrung der Rohre einsetzbar sind. Derartige Verbindungssysteme weisen jedoch den Nachteil auf, daß keine Verdrehsicherung gegeben ist und eine Vielzahl von Zubehörteilen erforderlich ist, um diese Profilverbindungssysteme zu Schutz- und Trenneinrichtungen, Gestellen und Regalen zu komplettieren.

### Vorteile der Erfindung

Die erfindungsgemäße Profilverbindung mit den kennzeichnenden Merkmalen des Anspruchs 1 weist demgegenüber den Vorteil auf, daß durch den unter einem Preßsitz in der Durchgangsbohrung angeordneten Zapfen des Verbindungselementes eine einfache und schnelle Montage gegeben sein kann. Dadurch ist ermöglicht, daß ohne mechanische Bearbeitung der Profilverbindung eine kostengünstige Anordnung gegeben sein kann. Der Zapfen kann in seiner Geometrie unterschiedlich ausgebildet sein, wobei der Außenumfang derart ausgebildet ist, daß ein Preßsitz zur Durchgangsbohrung ermöglicht ist.

Nach einer vorteilhaften Ausgestaltung der Erfindung ist vorgesehen, daß ein im Querschnitt einer quadratischen Durchgangsbohrung entsprechender Zapfen vorgesehen ist, wodurch eine Verdrehsicherung gegeben sein kann, so daß durch die form- und kraftschlüssige Verbindung eine präzise Verbindung und Anordnung der Profilschienen zueinander gewährleistet werden kann. Durch die kraft- und formschlüssige Verbindung des Verbindungselementes zur Profilschiene kann desweiteren ermöglicht sein, daß das Verbindungselement als Knotenelement ausgebildet sein kann, an dem an einer oder mehreren Außenflächen des Verbindungselementes jeweils eine Profilschiene angeordnet sein können. Dadurch kann eine derartige Profilverbindung eine hohe Flexibilität in der Anpassung an unterschiedliche Anwendungen ermöglichen. Durch den Einsatz von Profilschienen mit an dem Außenumfang der Durchgangsbohrung angeordneten Nuten kann desweiteren ein einfacher und schneller Anbau von weiteren Zubehörteilen gegeben sein.

Nach einer weiteren vorteilhaften Ausgestaltung der Erfindung ist vorgesehen, daß an der Außenfläche des Verbindungselementes zumindest ein achsparallel zum Zapfen angeordneter Vorsprung vorgesehen ist, der in einem zwischen den Nuten ausgebildeten Hohlkanal anordenbar ist. Dadurch kann unabhängig von der Ausgestaltung des Zapfens eine weitere Erhöhung der Verdrehsicherung gegeben sein. Darüber hinaus weisen derartige Vorsprünge den Vorteil auf, daß das Verbindungselmement zur Profilschiene zentriert werden kann. Im Belastungsfall der Profilverbindung können durch diese bzw. durch vorteilhafterweise zwei diagonal zueinander angeordneten Vorsprünge die auf das Verbindungselement wirkenden Momente aufgenommen werden.

Nach einer weiteren vorteilhaften Ausgestaltung der Erfindung ist vorgesehen, daß die Außenflächen des Verbindungselementes eine zumindest teilweise den Zapfen umgebende Vertiefung aufweisen. Diese Vertiefung ist als sogenannter Spanraum ausgebildet, so daß die beim Eintreiben des Zapfens des Verbindungselementes in die Durchgangsbohrung der Profilschiene anfallenden Späne aufgenommen werden können. Dadurch kann die Außenfläche des Verbindungselementes bündig an einer Stirnseite der Profilschiene anliegen.

Weitere Vorteile und vorteilhafte Ausgestaltungen des Gegenstandes der Erfindung sind der Beschreibung, der Zeichnung und den Patentansprüchen entnehmbar.

### Zeichnung

Ausführungsbeispiele der erfindungsgemäßen Profilverbindung sind in der Zeichnung dargestellt und werden in der nachfolgenden Beschreibung näher erläutert. Es zeigen:
- Fig. 1: eine schematische Darstellung von Komponenten der erfindungsgemäßen Profilverbindung vor dem Zusammenbau,
- Fig. 2: eine perspektivische Darstellung eines Verbindungselementes für eine Eckverbindung,
- Fig. 3: eine weitere perspektivische Darstellung des Verbindungselementes gemäß Fig. 2,
- Fig. 4: eine perspektivische Darstellung eines Verbindungselementes gemäß Fig. 2 und Fig. 3 mit einer Profilschiene im gefügtem Zustand,
- Fig. 5: eine weitere perspektivische Darstellung einer Profileckverbindung mit einem Verbindungselement gemäß Fig. 2 und Fig. 3 und zwei Profilschienen in gefügtem Zustand,
- Fig. 6: eine perspektivische Darstellung eines T-förmigen Verbindungselementes,
- Fig. 7: eine weitere perspektivische Darstellung eines T-förmigen Verbindungselementes und
- Fig. 8: eine perspektivische Darstellung eines Verbindungselementes gemäß Fig. 6 mit Profilschienen in gefügtem Zustand.

### Beschreibung der Ausführungsbeispiele

Die in der Zeichnung dargestellte Profilverbindung 11 besteht aus Profilschienen 12 und die Profilschienen 12 miteinander verbindbaren Verbindungselementen 13. Die Profilschienen 12 sind stranggepreßt aus Aluminium oder einer Aluminiumlegierung hergestellt. Diese weisen eine in Längsrichtung der Profilschiene 12 sich erstreckende Durchgangsbohrung 14, auch Kernzug genannt, mit einem quadratischen Querschnitt auf. An einer Außenfläche der Durchgangsbohrung 14 sind sich in Längsrichtung der Profilschiene 12 erstreckende T-förmige Nuten 16 vorgesehen.

Zwischen den Nuten 16 ist im Eckbereich der im Querschnitt quadratisch ausgebildeten Profilschiene 12 jeweils ein Hohlkanal 17 ausgebildet. Im dargestellten Ausführungsbeispiel sind die vier T-förmigen Nuten 16 gleichmäßig um 90° versetzt zueinander angeordnet und offen ausgebildet. Alternativ kann vorgesehen sein, daß eine oder mehrere Seitenflächen der Profilschiene 12 geschlossen ausgebildet sind. Desweiteren können auch mehrere Nuten 16 vorgesehen sein, die wahlweise geschlossen ausgebildet sein können. Gleichzeitig kann die Profilschiene 12 auch weitere Querschnitte aufweisen.

Das Verbindungselement 13 weist beispielsweise einen quaderförmigen Körper 18 auf, der als Spritzgußteil aus Kunststoff oder aus Aluminium bzw. Zinkdruckguß herstellbar ist. Der Körper 18 hat einen quadratischen Querschnitt mit rechtwinklig zueinander liegenden Außenflächen 19. An der Außenfläche 19 ist in einer Längsmittelachse des Körpers 18 ein von der Außenfläche 19 hervorspringender Zapfen 22 angeordnet. Dieser weist einen quadratischen Querschnitt auf, dessen Außenumfang geometrisch dem Querschnitt der Durchgangsbohrung 14 entspricht. Alternativ kann der Zapfen 22 weitere geometrische Formen aufweisen, die ermöglichen, daß der Zapfen 22 in die Durchgangsbohrung 14 einpreßbar ist.

Der Zapfen 22 weist an seinen Seitenflächen 23 zwei höckerförmige Erhebungen 24 auf, die im Abstand zueinander angeordnet sind. Alternativ kann vorgesehen sein, daß ebenso mehrere Erhebungen 24 vorgesehen sind, die an einer oder meheren Außenflächen 23 vorgesehen sind. Diese können einen von dem höckerförmigen Querschnitt abweichenden Querschnitt aufweisen. Durch diese Erhebungen 24 bzw. Rippen kann in zusammengebautem Zustand mit der Profilschiene 12 in der Durchgangsbohrung 14 ein Preßsitz erzielt werden. Die Erhebungen 24 weisen vorteilhafterweise ein Übermaß von 0,3 bis 0,5 mm gegenüber dem Innendurchmesser der Bohrung 14 auf.

Beim Verbinden der Profilschiene 12 mit dem Verbindungselement 13 wird der Zapfen 22 in die Durchgangsbohrung 14 eingeführt. Durch die strukturierte Seitenfläche 23 des Zapfens 22 kann erzielt werden, daß der Kraftaufwand für eine kraft- und formschlüssige Verbindung zwischen dem Zapfen 22 und der Durchgangsbohrung 14 nicht zu hoch wird. Der Zapfen 22 des Verbindungselementes 13 kann beispielsweise durch Hammerschläge in die Durchgangsbohrung 14 der Profilschiene 12 eingetrieben werden. Aufgrund des Übermaßes der Erhebungen 24 wird von diesen zumindest geringfügig Material abgetragen, so daß es zur Spanbildung kommen kann. Die Außenfläche 19 weist im Übergang zum Zapfen 22 eine den Zapfen 22 umgebende und als Spanraum ausgebildete Vertiefung 26 auf. Dadurch kann erzielt werden, daß die Außenfläche 19 bündig an einer Stirnfläche 27 der Profilschiene 13 anliegen kann.

An der Außenfläche 19 des Verbindungselementes 13 sind zwei diagonal zueinander versetzt angeordnete Vorsprünge 28 vorgesehen, die im zusammengebauten Zustand in die jeweiligen Hohlkanäle 17 der Profilschiene 12 eingreifen. Dadurch kann eine Verdrehsicherung erzielt werden. Gleichzeitig dienen diese Vorsprünge 28 zur Zentrierung des quaderförmigen Körpers 18 zur Profilschiene 12. Derartige Vorsprünge 28 können zusätzlich zum Zapfen 22 die auf die Profilverbindung 11 wirkenden Kräfte und Momente aufnehmen, so daß eine steife Ausgestaltung der Profilverbindung 11 gegeben sein kann. Wahlweise können nur ein Vorsprung 28 oder mehrere Vorsprünge 28 vorgesehen sein.

Das im Ausführungbeispiel dargestellte Verbindungselement 13 weist beispielhaft drei Zapfen 22 auf, so daß drei um 90° versetzt zueinander angeordnete Profilschienen 12 anbringbar sind. Das Verbindungselement 13 kann alternativ in einer Ebene des quaderförmigen Körpers 18 ein bis vier Zapfen 22 aufweisen. Ebenso kann beispielsweise ein T-förmiges Verbindungsstück vorgesehen sein. Desweiteren kann jede beliebige Anordnung von einem oder mehreren Zapfen 22 an dem quaderförmigen Körper 18 gegeben sein.

An einer Unterseite der vertikal angeordneten Profilschiene 12 ist ein Verbindungselement 31 vorgesehen, das zur Aufnahme eines Stützfußes 34 dient. Der Zapfen 22 ist an einem plattenförmigen Element 32 vorgesehen und als Hohlkörper ausgebildet. Darin kann eine Gewindehülse 33 eingesetzt oder angeformt sein. In diese Gewindehülse 33 ist der Stützfuß 34 mit seinem Gewindeabschnitt 36 anordenbar. Dadurch kann eine höhenverstellbare Profilverbindung 11 geschaffen sein. Vorteilhafterweise ist an der zur Stirnfläche 27 weisenden Außenfläche 19 ebenfalls eine als Spanraum ausgebildete Vertiefung 26 vorgesehen.

An einem hinteren Ende der horizontal verlaufenden Profilschiene 12 ist eine Abdeckkappe 41 dargestellt. Diese ermöglicht eine Schutz für eine Stirnfläche 27 der Profilschiene 12. Diese Abdeckkappe 41 weist ein plattenförmiges Element 42 auf, an dem ein Zapfen 22 angeordnet ist.

Das Verbindungselmement 31 und die Abdeckkappe 41 sind analog zum Verbindungselement 13 zur Stirnfläche 27 der Profilschiene 12 anordenbar und können die am Beispiel des Verbindungselementes 13 beschriebenen vorteilhaften Ausgestaltungen aufweisen.

Durch die erfindungsgemäße Profilverbindung 11, die als Einschlagverbindersystem ausgebildet ist, kann ohne mechanische Bearbeitung der Verbindungselemente 13, 31 und der Abdeckkappe 41 eine schnelle Anpassung an unterschiedliche Anwendungsfälle gegeben sein. Darüber hinaus kann durch die bauteilereduzierte Anordnung eine kostengünstige Profilverbindung 11 geschaffen sein, die einfach und schnell zusammengebaut werden kann.

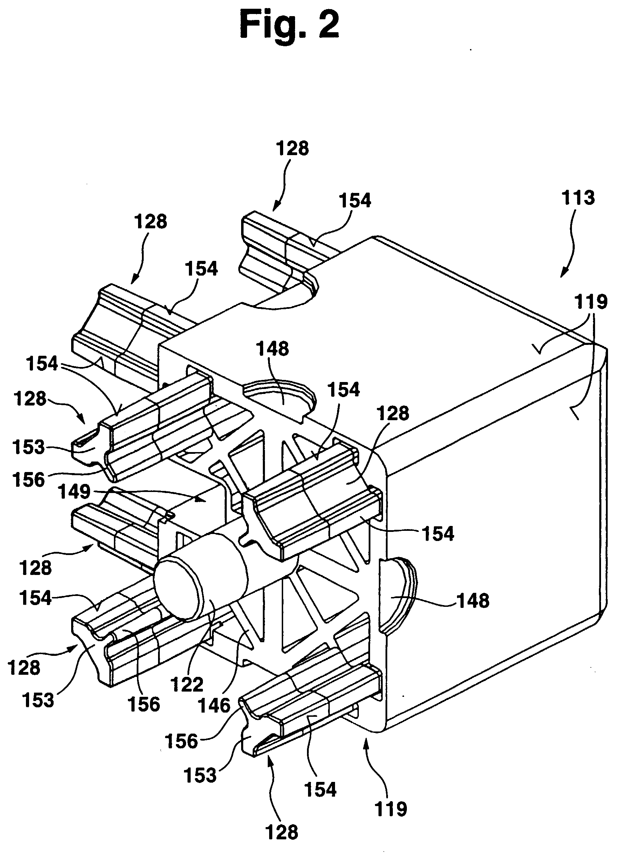

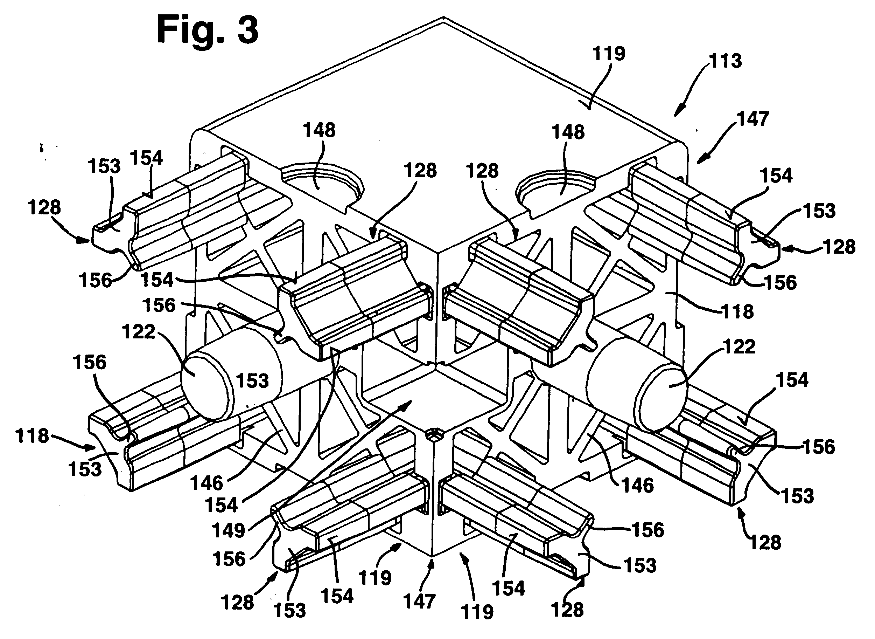

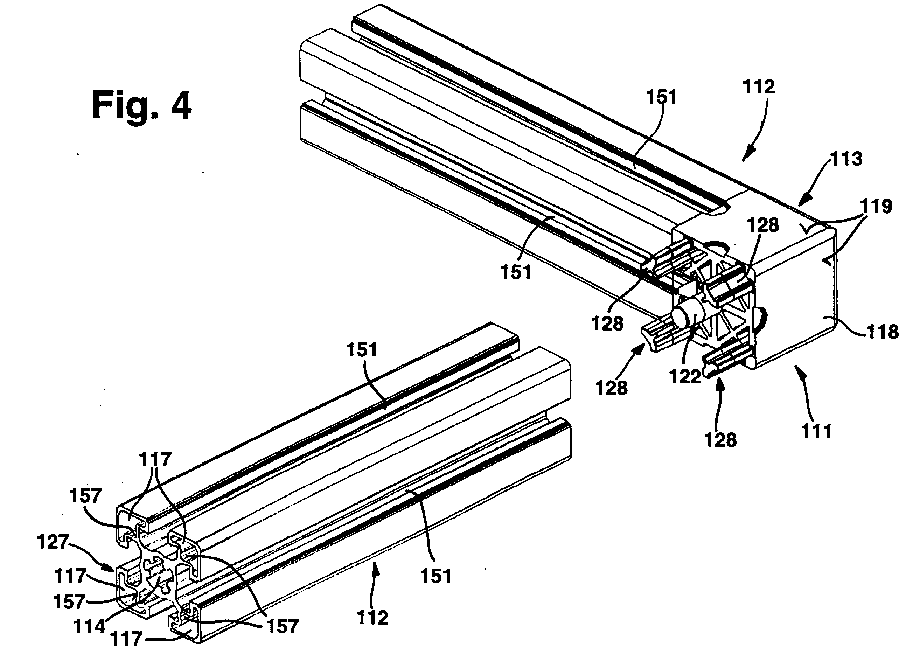

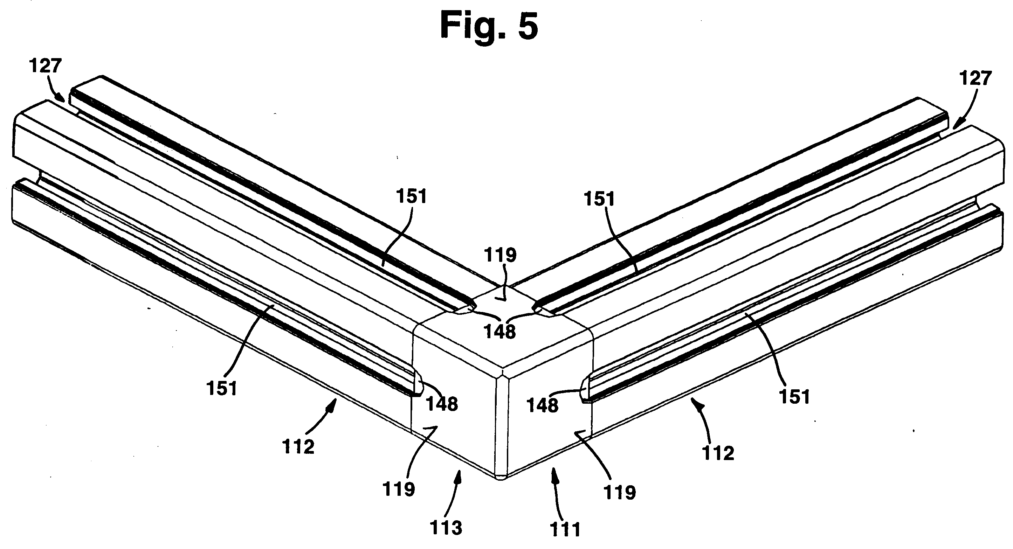

In Fig. 2 und Fig. 3 ist jeweils eine perspektivische Darstellung eines Verbindungselementes 113 dargestellt, welches beispielhaft als Eckverbindungselement ausgebildet ist. Dieses Verbindungselement 113 ermöglicht die Anordnung von zwei um 90° zueinander versetzt angeordnete Profilschienen 112 (Fig.4 und 5). Das Verbindungselement 113 weist einen von einer Grundfläche 119 hervorstehenden annähernd runden Zapfen 122 auf. Dieser ist beispielhaft als ein N-Eck oder Zylinder ausgebildet. Von der Außenfläche 119 gesehen bis zum freien Ende des Zapfens 122 kann dieser konisch ausgebildet sein, der sich zum freien Ende hin verjüngt. Die dem Zapfen 122 zugeordnete Außenfläche 119 ist durch eine Verrippung ausgebildet, die mehrere Öffnungen aufweist. Die Verrippung ist durch Stege 146 ausgebildet, die vorzugsweise eine regelmäßige Anordnung, wie beispielsweise in Fig. 2 und Fig. 3 dargestellt ist, aufweisen. In den äußeren Eckbereichen 147 des würfelförmig ausgebildeten Körpers 118 sind Vorsprünge 128 angeordnet, die achsparallel zum Zapfen 122 sich von der Außenfläche 119 aus erstrecken. Diese Vorsprünge 128 weisen einen Querschnitt auf, der einer T-Form angenähert ist. Dieser Querschnitt ermöglicht, daß eine gute Kraftübertragung und Momentenübertragung von dem Verbindungselement 113 auf die Profilschiene 112 erfolgt, indem diese Vorsprünge 128 ebenso unter Pressung in Hohlkanäle 117 der Profilschiene 112 eingreifen. Die Form der Vorsprünge 128 ist an die Querschnittsform der Hohlkanäle 117 anpaßbar, so daß in Abhängigkeit mit der verwendeten Profilschiene 112 die Vorsprünge 128 ausgebildet sind.

In den in Fig. 2 und 3 dargestellten Ausführungsbeispielen ist vorgesehen, daß das Verbindungselement 113 als Spritzgußteil ausgebildet ist und die Vorsprünge 128 und Zapfen 122 an den Grundkörper 118 angeformt sind. Alternativ kann vorgesehen sein, daß der Grundkörper 118 Bohrungen zur Aufnahme der Zapfen 122 und Vorsprünge 128 aufweist, so daß auf den jeweiligen Anwendungsfall abgestimmt wahlweise nur der Zapfen 122 oder nur zwei oder mehrere Vorsprünge 128 oder eine beliebige Kombination hiervon zur Verbindung des Verbindungselementes 113 mit der Profilschiene 112 in den Körper 118 eingesetzt werden kann.

Die Vorsprünge 128 sind analog zum Zapfen 122 an ihrem freien Ende ebenfalls verjüngt ausgebildet, wodurch erzielt werden kann, daß ein einfaches und schnelles Ansetzen des Verbindungselementes 113 an der Bohrung 114 und Hohlkanälen 117 ermöglicht ist, bevor beispielsweise mit Hammerschlägen eine Verbindung geschaffen wird, bei der die Außenflächen 119 der Profilschiene 112 nahezu nahtlos in die Außenflächen 119 des Verbindungselementes 113 übergehen.

Das in den Fig. 2 und 3 als Einschlageckverbinder ausgebildete Verbindungselement 113 weist vier geschlossene und ebene Außenflächen 119 auf. An Seitenkanten der Außenfläche 119, die an eine den Zapfen 122 aufnehmende Außenfläche 119 anschließt, sind halbkreisförmige Vertiefungen 148 vorgesehen, die zur Anschlußfläche hin offen ausgebildet sind. Zwischen den zwei um 90° zueinander versetzt angeordneten Zapfen 122 ist eine Ausnehmung 149 vorgesehen, die im Querschnitt gesehen einer Querschnittsfläche einer Nut 151 (Fig. 4 und Fig. 5) der Profilschiene 112 entspricht. Dadurch ist ermöglicht, daß bei dem Einsatz einer derartigen Profilverbindung in einem durch vier Eckverbindungselemente 113 und zumindest vier Profilschienen 112 beispielsweise eine Trennscheibe eingesetzt und aufgenommen werden kann, ohne daß die Eckbereiche einer derartigen Trennscheibe oder eines Trennelementes bearbeitet werden müssen.

Durch die beispielhaft ausgebildete Verrippung mittels Stege 146 gemäß den Fig. 2 und 3 kann ein Eckverbindungselement 113 nach spritzgußtechnischen Gesichtspunkten optimiert hergestellt sein, welches gleichzeitig aufgrund der Verrippung eine hohe Kraftaufnahme und Kraftübertragung bzw. eine hohe Steifigkeit aufweist. Durch die fachwerkartige Verrippung können Zug- und Druckspannungen als auch Biege- und Torsionsmomente hinreichend aufgenommen werden.

In Fig. 4 ist eine Profilverbindung 111dargestellt, bei der eine Profilschiene 112 vor der Montage zum Verbindungselement 113 und eine Profilschiene 112 nach der Montage zum Verbindungselement 113 dargestellt ist.

In Fig. 5 ist eine alternative perspektivische Darstellung zu Fig. 4 gezeigt, bei der beide Profilschienen 112 zum Verbindungselement 113 positioniert sind. In Fig. 4 ist beispielhaft eine Profilschiene 112 dargestellt, die eine runde Durchgangsbohrung 114 mit gleichmäßig zueinander beabstandeten und radial nach innen weisenden Stegen aufweist. Außerhalb der Durchgangsbohrung 114 sind diagonal nach außen verlaufende Stege vorgesehen, die jeweils ein Hohlkanal 117 tragen, welche im Gesamtquerschnitt der Profilschiene 112 gesehen einen quadratischen Querschnitt bildet. Gleichzeitig wird zwischen den Hohlkanälen 117 eine Nut 151 ausgeformt, die einen Querschnitt zur Aufnahme einer Hammerkopfschraube oder eines Nutensteines oder dergleichen aufweist.

In Zusammenschau mit den Hohlkanälen 117 wird die Funktion des Querschnitts der Vorsprünge 128 deutlich. An dem horizontalen Abschnitt 153 der Vorsprünge 128 sind die freien Enden nach außen abgewinkelt ausgebildet, die Anlageflächen 154 aufweisen. Diese verlaufen parallel zu den Außenflächen des Grundkörpers 118 und liegen plan an geraden Abschnitten auf der Innenseite der Hohlkanäle 117 an. Der vertikale Abschnitt 156 stützt sich in einem Eckbereich 157 im Hohlkanal 117 ab. Dadurch kann eine kraft- und formschlüssige Verbindung geschaffen sein, die darüber hinaus eine Zentrierung ermöglicht, so daß die Außenflächen der Profilschiene 112 in einer Ebene zu den Außenflächen 119 des Verbindungselementes 113 im gefügten Zustand angeordnet sind.

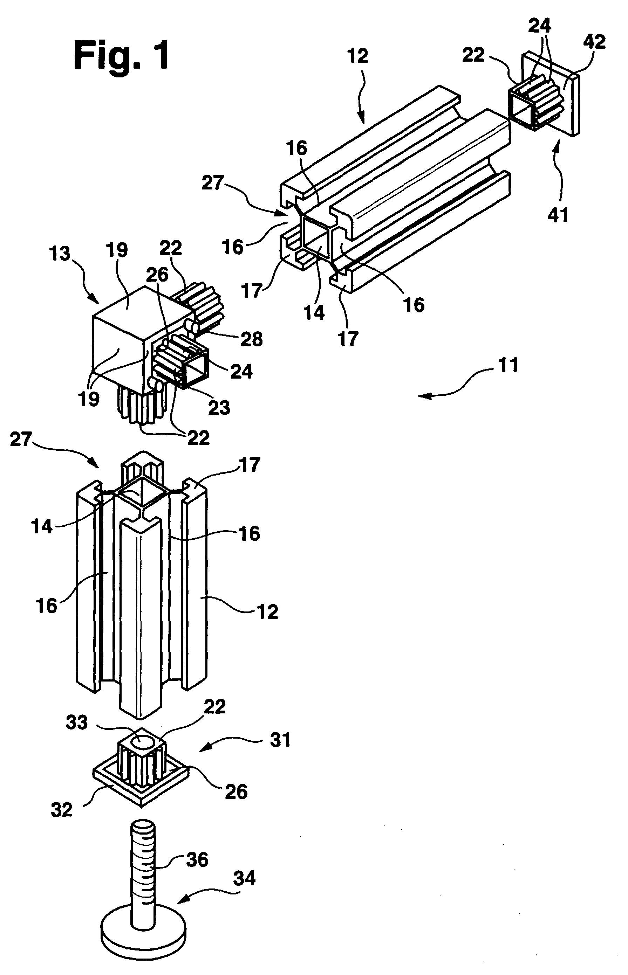

Die beispielhafte Ausgestaltung des Verbindungselementes 113, kann ebenso auf ein Verbindungselement 13, 31 in Fig. 1 analog übertragen werden.

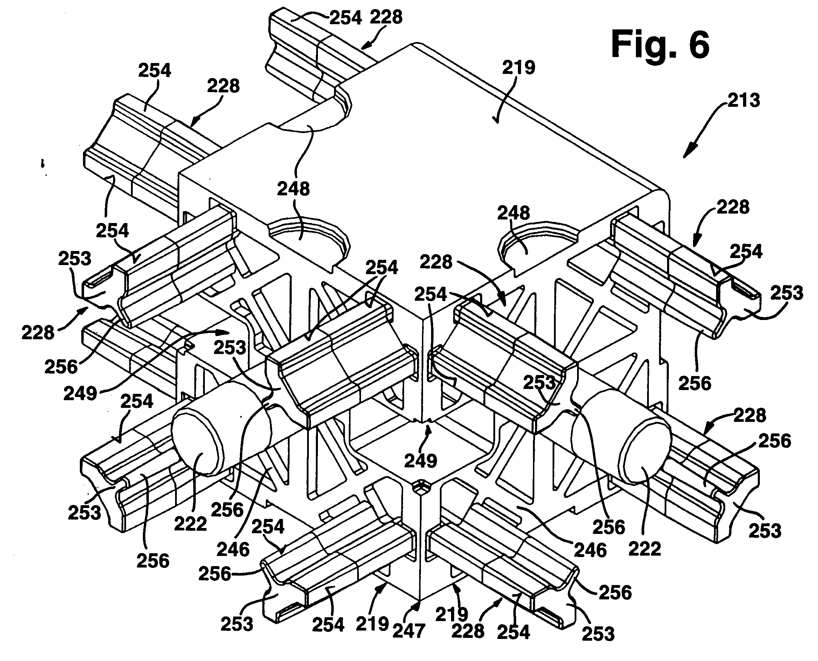

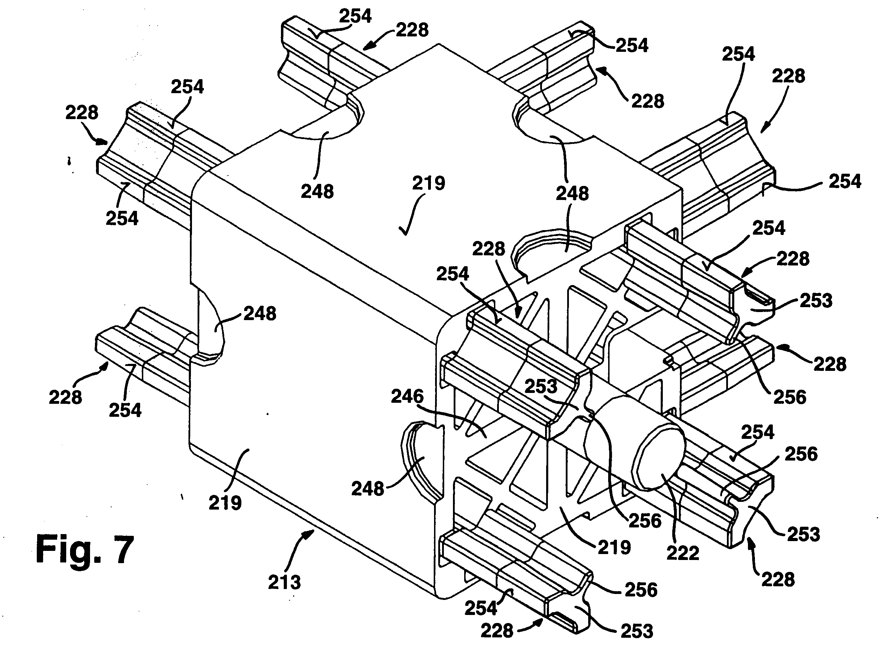

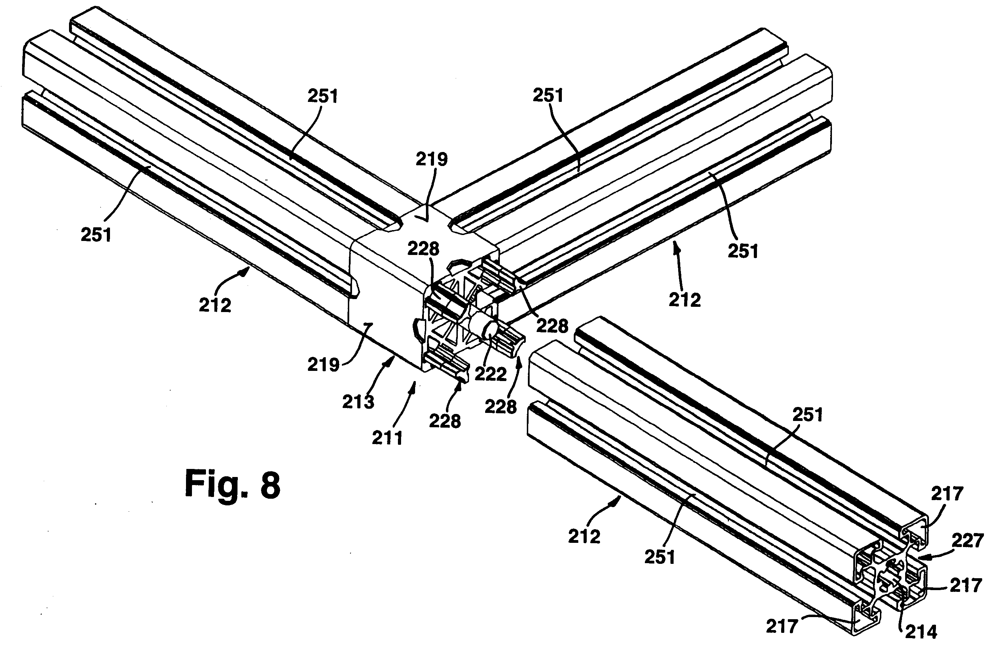

In den Fig. 6 bis 8 ist eine weitere alternative Ausführungsform dargestellt, bei der das Verbindungselement 213 als T-förmiger Einschlagverbinder ausgebildet ist. Die Zapfen 222 und Vorsprünge 228 sind um 90° versetzt zueinander angeordnet und liegen in einer Ebene. Dadurch können die Profilschienen 212 T-förmig zueinander angeordnet werden, wie beispielsweise in Fig. 8 dargestellt ist. Die konkrete Ausgestaltung des Verbindungselementes 212 entspricht prinzipiell dem Verbindungselement 113. Die Profilschienen 212 sind mit den Profilschienen 112 gemäß den Fig. 4 und 5 identisch ausgebildet.

Unabhängig der Ausführungsform der Verbindungselemente 13 und 113, 213 können die Anzahl der an jeder Außenfläche angeordneten Zapfen auf den jeweiligen Anwendungsfall abgestimmt sein. Somit können beispielsweise an jeder Außenfläche jeweils ein Zapfen vorgesehen sein. Desweiteren kann eine beliebige Anordnung und Anzahl der Zapfen an den jeweiligen Außenflächen vorgesehen sein, die den Anschluß der Profilschienen ermöglicht. Desweiteren kann vorgesehen sein, daß in Abhängigkeit der Querschnittsform der Profilschiene ein oder mehrere Vorsprünge an dem Verbindungselement angeordnet sind. Diese können auch entsprechend ihrer Querschnittsform an den Profilquerschnitt der Profilschiene angepaßt werden.

## Patentansprüche

1. Profilverbindung, insbesondere für Gestelle oder dergleichen, mit Profilschienen (12, 112, 212), die eine sich in Längsrichtung erstreckende Durchgangsbohrung (14, 114, 214) aufweisen und mit Verbindungselementen (13, 31; 113, 213), deren Außenfläche (19, 119, 219) zur Stirnseite (27, 127, 227) der Profilschiene (12, 112, 212) anordenbar ist, dadurch gekennzeichnet, daß die Profilschiene (12, 112, 212) eine rechteckig ausgebildete Durchgangsbohrung (14, 114, 214) aufweist, in die ein an der Außenfläche (19, 119, 219) des Verbindungselmentes (13, 31, 113, 213) angeordneter Zapfen (22, 122, 222) unter Pressung einsetzbar ist.

2. Profilverbindung nach Anspruch 1, dadurch gekennzeichnet, daß der Zapfen (22) des Verbindungselementes (13, 31) rechteckig ausgebildet ist.

3. Profilverbindung nach Anspruch 1 oder 2, dadurch gekennzeichnet, daß der Zapfen (22) eine strukturierte Mantelfläche (23) aufweist, die vorteilhafterweise durch mit Abstand zueinander angeordneten Erhebungen (24) ausgebildet ist.

4. Profilverbindung nach Anspruch 1, dadurch gekennzeichnet, daß der Zapfen (122, 222) N-eckförmig, vorzugsweise rund ausgebildet ist.

5. Profilverbindung nach einem der vorhergehenden Ansprüche, dadurch gekennzeichnet, daß an der Außenfläche (19, 119, 219) des Verbindungselementes (13, 113, 213) zumindest ein achsparallel zum Zapfen (22, 122, 222) angeordneter Vorsprung (28, 128, 228, 114, 214) vorgesehen ist, der in einem außerhalb der Durchgangsbohrung (14, 114, 214) angeordneten Hohlkanal (17, 117, 217) der Profilschiene (12, 112, 212) anordenbar ist.

6. Profilverbindung nach Anspruch 4, dadurch gekennzeichnet, daß zumindest zwei diagonal zueinander angeordnete Vorsprünge (28, 128, 228) an der Außenfläche (19, 119, 219) des Verbindungselementes (13, 31, 113, 213) angeordnet sind.

7. Profilverbindung nach Anspruch 5 oder 6, dadurch gekennzeichnet, daß die Vorsprünge (28, 128, 228) ein in das Hohlprofil (17, 117, 217) der Profilschiene (12, 112, 212) eingreifendes T-förmiges Profil aufweisen.

8. Profilverbindung nach Anspruch 5 oder 6, dadurch gekennzeichnet, daß die Vorsprünge (28, 128, 228) ein in das Hohlprofil (17, 117, 217) der Profilschiene (12, 112, 212) eingreifendes rundes Profil aufweisen.

9. Profilverbindung nach einem der vorhergehenden Ansprüche, dadurch gekennzeichnet, daß die Außenfläche (19) des Verbindungselementes (13, 31) eine zumindest teilweise den Zapfen (22) umgebende, als Spanraum ausgebildete Vertiefung (26) aufweist.

10. Profilverbindung nach einem der vorhergehenden Ansprüche, dadurch gekennzeichnet, daß das Verbindungselement (13, 113, 213) mit wenigstens zwei Zapfen (22, 122, 222) ausgebildet ist.

11. Profilverbindung nach Anspruch 1, dadurch gekennzeichnet, daß das Verbindungselement (13, 113, 213) einen würfelförmigen Körper (18, 118, 218) mit Außenflächen (19, 119, 219) aufweist, die ohne Zapfen (22, 122, 222) als eine ebene und geschlossene Fläche ausgebildet sind.

12. Profilverbindung nach einem der vorhergehenden Ansprüche, dadurch gekennzeichnet, daß der Körper (18, 118, 218) Vertiefungen aufweist, in die die Zapfen (22, 122, 222) und Vorsprünge (28, 128, 228) einsetzbar sind.

13. Profilverbindung nach Anspruch 1, dadurch gekennzeichnet, daß das Verbindungselement (31) als Stützfußaufnahme ausgebildet ist, das einen Zapfen (22) aufweist, in dem eine Gewindehülse (33) anordenbar ist.

14. Profilverbindung nach Anspruch 13, dadurch gekennzeichnet, daß eine Abdeckkappe (41) mit einem Zapfen (22) an der Stirnfläche (27) der Profilschiene (12) unter Pressung anordenbar ist.

15. Profilverbindung nach einem der vorhergehenden Ansprüche, dadurch gekennzeichnet, daß das Verbindungselement (13, 113, 213) als Spritzgußteil ausgebildet ist.
